# EUROPÄISCHE PATENTSCHRIFT

(11) **EP 0 415 095 B1**
(45) Veröffentlichungstag und Bekanntmachung des Hinweises auf die Patenterteilung: **05.05.1993**
(21) Anmeldenummer: 90114498.0
(22) Anmeldetag: 27.07.1990
(51) Int. Cl.: C04B 7/42, C04B 7/60, F27B 7/20

(54) **Verfahren zur Wärmebehandlung von feinkörnigem Gut**
Process for the heat-treatment of fines
Procédé pour le traitement thermique de matières finement divisées

(30) Priorität: 01.08.1989 DE 3925475
(43) Veröffentlichungstag der Anmeldung: 06.03.1991
(73) Patentinhaber: KRUPP POLYSIUS AG, 59269 Beckum (DE)
(72) Erfinder: Kupper, Detlev Martin, Dr. Dipl.-Ing., D-4404 Telgte (DE); Adler, Klaus, Dipl.-Ing., D-4740 Oelde (DE)
(74) Vertreter: Tetzner, Volkmar, Dr.-Ing. Dr. jur.

(56) Entgegenhaltungen:
- DE-A- 3 542 145
- DE-A- 3 545 317
- FR-A- 2 280 601
- GB-A- 2 178 147
- ZKG, Nr. 38, 1985, Seiten 57-66; A. SCHEUER et al.: "Bildung und Abbau von NO in Zementofenanlagen"

## Beschreibung

Die Erfindung betrifft ein Verfahren (entsprechend dem Oberbegriff des Anspruches 1) zur Wärmebehandlung von feinkörnigem Gut, insbesondere zur Schadstoffreduzierung bei der Zementherstellung.

Bei der Wärmebehandlung von feinkörnigem Gut, insbesondere bei der Herstellung von Zement, enthalten die Abgase des Drehrohrofens im allgemeinen einen mehr oder weniger großen Anteil an Stickstoffoxiden (sog. NOₓ-Gehalt). Die Bildung dieser Stickstoffoxide geschieht teils durch Reaktion des Sauerstoffs mit dem Stickstoff der Verbrennungsluft, teils durch Oxidieren der Stickstoffverbindungen des Brennstoffes (vgl. "Zement-Kalk-Gips" 37/1984, S.499 - 507).

Der NOₓ-Gehalt der Abgase einer Drehrohrofenanlage ist nicht zuletzt wegen der hierdurch verursachten Emissionsprobleme unerwünscht. Es wurden daher bereits verschiedene Verfahren entwickelt, um den NOₓ-Gehalt der Abgase zu verringern.

So ist es bekannt, bei Vorcalcinierverfahren in der Vorcalcinationszone außerhalb des Drehrohrofens durch unterstöchiometrische Verbrennung von Brennstoff eine reduzierende Atmosphäre zu erzeugen ("ICS Proceedings", 1979, S.45, Fig. 6). Hierbei erfolgt die Calcination des vorgewärmten Gutes in zwei Stufen: die 1. Stufe wird mit Abluft der Kühlzone unter Sauerstoffmangel betrieben, so daß ein CO-haltiges Gasgemisch aus dieser Vorcalcinationszone in die Ofenabgasleitung eintritt. In dieser Ofenabgasleitung bildet sich damit zunächst eine reduzierende Zone, in der ein Teil des NOₓ zu Stickstoff reduziert wird. In dem anschließenden Teil der Ofenabgasleitung werden durch Einführung eines weiteren Teiles von Kühlerabluft Verbrennungsbedingungen geschaffen, so daß der Restausbrand des Brennstoffes erfolgt.

Gegenstand der älteren deutschen Patentanmeldung P 35 22 883.0-45 ist weiterhin ein Verfahren, bei dem in die Abgase des Drehrohrofens außerhalb des Drehrohrofens vor der Einmündung der Abgase der Vorcalcinationszone zusätzlicher Brennstoff eingeführt wird, wobei die Menge dieses zusätzlichen Brennstoffes und der Sauerstoffgehalt der Abgase der Brennzone so bemessen werden, daß in der Zone vor der Einmündung der Abgase der Vorcalcinationszone eine unterstöchiometrische Verbrennung in den Abgasen der Brennzone erfolgt.

Man hat weiterhin bereits die Reaktion von NO mit CO über verschiedenen feingemahlenen Zement-Rohmaterialien und -Rohmischungen untersucht und hierbei eine katalytische Wirkung feingemahlener Zement-Rohmaterialien auf diese Reaktion festgestellt ("Zement- Kalk-Gips", 5/1978, S.242 - 244). Nach diesen Versuchen erscheint es möglich, die feingemahlenen Materialien als Katalysatoren in flüssiger Form bei hoher Temperatur für die Reaktion von NO mit CO zu verwenden.

Bei den der vorliegenden Erfindung zugrundeliegenden Versuchen hat sich nun gezeigt, daß die zum Zwecke der NOₓ-Reduzierung erzeugte CO-Konzentration nicht zu hoch sein darf, wenn einerseits die Klinkerqualität nicht negativ beeinflußt und andererseits eine Ansatzbildung im Ofeneinlauf-, Calcinator- und Vorwärmerbereich vermieden werden soll. Des weiteren hat sich gezeigt, daß bei zunehmender Temperatur die NOₓ-Reduktion in reduzierender Atmosphäre schneller und vollständiger verläuft.

Der Erfindung liegt daher die Aufgabe zugrunde, ein Verfahren der im Oberbegriff des Anspruches 1 vorausgesetzten Art so auszubilden, daß mit im Vergleich zum Stand der Technik verringerter Brennstoffmenge und kleinerer CO-Konzentration die gleiche NOₓ-Minderungsrate erzielt wird, wobei auch die Einstellung sehr hoher NOₓ-Minderungsraten möglich ist und eine deutliche NOₓ-Minderung auch in einer absolut oxidierenden Atmosphäre erzielbar ist.

Diese Aufgabe wird erfindungsgemäß durch die kennzeichnenden Merkmale des Anspruches 1 gelöst. Zweckmäßige Ausgestaltungen der Erfindung sind Gegenstand der Unteransprüche.

Erfindungsgemäß wird somit
- zur Erzeugung einer reduzierenden Atmosphäre im Guteintragsbereich des Drehrohrofens ein Teil des für die gesamte Wärmebehandlung eingesetzten Brennstoffes in den Guteintragsbereich des Drehrohrofens eingeführt
- und in diesen Guteintragsbereich des Drehrohrofens ferner wenigstens ein die Wirkung der reduzierenden Atmosphäre auf die NOₓ-Reduktion unterstützendes Verstärkungsreagenz eingeführt.

Die erfindungsgemäße Kombination dieser beiden Verfahrensmaßnahmen führt zu einer überraschend starken NOₓ-Reduktion mit verhältnismäßig geringer Brennstoffmenge und niedriger CO-Konzentration.

Als Verstärkungsreagenzien können eisenhaltige Komponenten, aluminiumhaltige Komponenten, NH₂-, NH₃- oder NH₄⁺-haltige Verbindungen oder auch Gemische dieser Stoffe Verwendung finden.

Aluminium- und Eisenverbindungen wirken katalytisch bei der Reduzierung von NOₓ zu Stickstoff in reduzierender Atmosphäre. NHₓ-Verbindungen reduzieren NOₓ selektiv zu Stickstoff.

Im Guteintragsbereich des Drehrohrofens wird zweckmäßig eine CO-Konzentration von 0,1 bis 5 %, vorzugsweise von 0,2 bis 2 %, erzeugt.

Durch Brennstoffzufuhr in den Ofeneinlauf wird in diesem Guteintragsbereich des Drehrohrofens entweder eine absolut reduzierende Atmosphäre erzeugt, bei der im gesamten zu betrachtenden Raum Sauerstoffmangel besteht, oder es wird eine lokal reduzierende Atmosphäre geschaffen, bei der Sauerstoffmangel nur örtlich in einem bestimmten Raumanteil vorliegt, während der übrige Raum oxidierende Atmosphäre, d. h. Sauerstoffüberschuß, aufweist. Dabei kann im gesamten betrachteten Raum eine insgesamt oxidierende Atmosphäre vorliegen. Durch Zugabe von Verstärkungsreagenzien, die entweder gemeinsam mit dem Brennstoff oder parallel zum Brennstoff in den Guteintragsbereich des Drehrohrofens eingeführt werden, kann die Wirkung der lokal oder absolut reduzierenden Atmosphäre auf die NOₓ-Reduktion deutlich intensiviert werden.

Durch die kombinierte Zufuhr von Brennstoff und Verstärkungsreagenzien in den Ofeneinlauf wird im Vergleich zur reinen Brennstoffzufuhr ohne Zugabe von Verstärkungsreagenzien
- weniger Brennstoff für die gleiche NOₓ-Minderungsrate benötigt,
- eine geringere CO-Konzentration für die gleiche NOₓ-Minderungsrate erforderlich,
- eine deutliche NOₓ-Minderung auch in absolut oxidierender Atmosphäre möglich (wobei in Teilbereichen des Raumes eine lokal reduzierende Atmosphäre geschaffen wird),
- die Einstellung höherer NOₓ-Minderungsraten ermöglicht
- und durch eine intensive Vermischung von Brennstoff und Verstärkungsreagenzien gewährleistet, daß die Verstärkungsreagenzien zuverlässig immer dort wirken, wo CO entsteht (hierbei muß das CO nicht in einer reduzierenden Atmosphäre gebildet werden, sondern kann als Zwischenprodukt bei der Verbrennung in oxidierender Atmosphäre auftreten).

Der Brennstoff und die Verstärkungsreagenzien werden zweckmäßig mit einer Geschwindigkeit von 10 bis 140 m/s, vorzugsweise von 30 bis 70 m/s, in den Drehrohrofen eingeführt. Die Einführung kann pneumatisch in Pulverform erfolgen, jedoch auch flüssig (beispielsweise durch Zerstäubung) oder gasförmig.

Das erfindungsgemäße Verfahren läßt sich sowohl bei Drehrohrofenanlagen mit Vorcalcinationseinrichtung als auch bei solchen ohne Vorcalcinationseinrichtung vorteilhaft einsetzen.

In beiden Fällen werden zweckmäßig 5 bis 20 %, vorzugsweise 8 bis 15 % des für die gesamte Wärmebehandlung in der Drehrohrofenanlage eingesetzten Brennstoffes in den Guteintragsbereich des Drehrohrofens eingeführt.

Bei Anlagen mit Vorcalcinationseinrichtung (bei denen das im Zyklonvorwärmer vorgewärmte Gut vor Eintritt in den Drehrohrofen zunächst noch in einer mit zusätzlichem Brennstoff versorgten Vorcalcinationszone entsäuert wird) werden zweckmäßig 40 bis 60 % des gesamten Brennstoffes im Bereich der Gutaustragsseite des Drehrohrofens, 5 bis 20 % in den Guteintragsbereich des Drehrohrofens und 20 bis 55 % im Bereich der Vorcalcinationszone eingeführt.

Bei Anlagen ohne Vorcalcinationseinrichtung (bei denen das im Zyklonvorwärmer vorgewärmte Gut unmittelbar in den Drehrohrofen eingeführt wird) werden zweckmäßig 80 bis 95 % des gesamten Brennstoffes im Bereich der Gutaustragsseite des Drehrohrofens und 5 bis 20 % im Guteintragsbereich des Drehrohrofens zugegeben.

Die Wirksamkeit des erfindungsgemäßen Verfahrens läßt sich an folgendem praktischen Beispiel abschätzen:
- Eine in herkömmlicher Weise ohne reduzierende Atmosphäre und ohne Verstärkungsreagenzien betriebene Drehrohrofenanlage zur Zementherstellung zeigt eine NOₓ-Emission von 500 ppm.
- Bei Einstellung einer reduzierenden Atmosphäre, jedoch ohne Verwendung von Verstärkungsreagenzien, verringerte sich die NOₓ-Emission auf 325 ppm.
- Die Verwendung von Verstärkungsreagenzien ohne gleichzeitige Einstellung einer reduzierenden Atmosphäre ergab eine NOₓ-Emission von 400 ppm.
- Bei der erfindungsgemäßen Kombination einer reduzierenden Atmosphäre und des Einsatzes derselben Menge und Art vom Verstärkungsreagenzien konnte die NOₓ-Emission auf 200 ppm verringert werden.

## Patentansprüche

1. Verfahren zur Wärmebehandlung von feinkörnigem Gut, insbesondere zur Schadstoffreduzierung bei der Zementherstellung, wobei das Gut in einem Vorwärmer mit den Abgasen eines Drehrohrofens vorgewärmt und in dem von der Gutaustragsseite her befeuerten Drehrohrofen gebrannt wird,
gekennzeichnet durch die Kombination folgender Verfahrensschritte:
a) zur Erzeugung einer reduzierenden Atmosphäre im Guteintragsbereich des Drehrohrofens wird ein Teil des für die gesamte Wärmebehandlung eingesetzten Brennstoffes in den Guteintragsbereich des Drehrohrofens eingeführt;
b) in diesen Guteintragsbereich des Drehrohrofens wird ferner wenigstens ein die Wirkung der reduzierenden Atmosphäre auf die NOₓ-Reduktion unterstützendes Verstärkungsreagenz eingeführt.

2. Verfahren nach Anspruch 1, dadurch gekennzeichnet, daß als Verstärkungsreagenzien eisenhaltige Komponenten, aluminiumhaltige Komponenten, NH₂-, NH₃- oder NH₄⁺-haltige Verbindungen oder Gemische dieser Stoffe Verwendung finden.

3. Verfahren nach Anspruch 1, dadurch gekennzeichnet, daß 5 bis 20 %, vorzugsweise 8 bis 15 %, des für die gesamte Wärmebehandlung eingesetzten Brennstoffes in den Guteintragsbereich des Drehrohrofens eingeführt werden.

4. Verfahren nach Anspruch 3, bei dem das im Vorwärmer vorgewärmte Gut vor Eintritt in den Drehrohrofen zunächst noch in einer mit zusätzlichem Brennstoff versorgten Vorcalcinationszone entsäuert wird, dadurch gekennzeichnet, daß 40 bis 60 % des gesamten Brennstoffes im Bereich der Gutaustragsseite des Drehrohrofens, 5 bis 20 % in den Guteintragsbereich des Drehrohrofens und 20 bis 55 % im Bereich der Vorcalcinationszone eingeführt werden.

5. Verfahren nach Anspruch 3, bei dem das im Vorwärmer vorgewärmte Gut unmittelbar in den Drehrohrofen eingeführt wird, dadurch gekennzeichnet, daß 80 - 95 % des gesamten Brennstoffes im Bereich der Gutaustragsseite des Drehrohrofens und 5 bis 20 % im Guteintragsbereich des Drehrohrofens eingeführt werden.

6. Verfahren nach Anspruch 1, dadurch gekennzeichnet, daß im Guteintragsbereich des Drehrohrofens eine CO-Konzentration von 0,1 bis 5 %, vorzugsweise von 0,2 bis 2 %, erzeugt wird.

7. Verfahren nach Anspruch 1, dadurch gekennzeichnet, daß die Verstärkungsreagenzien mit dem Brennstoff vermischt in den Drehrohrofen eingeführt werden.

8. Verfahren nach Anspruch 1, dadurch gekennzeichnet, daß die Verstärkungsreagenzien unabhängig vom Brennstoff, jedoch in die gleichen Zonen im Guteintragsbereich des Drehrohrofens wie der Brennstoff eingeführt werden.

9. Verfahren nach Anspruch 1, dadurch gekennzeichnet, daß der Brennstoff und die Verstärkungsreagenzien mit einer Geschwindigkeit von 10 bis 150 m/s, vorzugsweise von 30 bis 70 m/s, in den Drehrohrofen eingeführt werden.

10. Verfahren nach Anspruch 1, dadurch gekennzeichnet, daß das den Drehrohrofen verlassende Abgas mindestens eine weitere Entschwefelungsstufe und/oder Entstikkungsstufe (Brennstoffstufung, Luftstufung, Verfahren zur selektiven katalytischen Reduktion, Verfahren zur selektiven nicht-katalytischen Reduktion) durchläuft.

11. Verfahren nach Anspruch 10, dadurch gekennzeichnet, daß zumindest ein Teil des Brennstoffes und/oder der Verstärkerreagenzien aus mindestens einer der in Gasrichtung folgenden Entschwefelungsstufen und/oder Entstickungsstufen stammt.

12. Verfahren nach Anspruch 1, dadurch gekennzeichnet, daß zur Verbrennung des im Guteintragsbereich des Drehrohrofens entstandenen CO ein heißes, sauerstoffhaltiges Gas - z.B. heiße Luft aus dem Kühler - in die in Gasrichtung dem Drehrohrofen nachgeschaltete Gasleitung oder Vorcalciniereinrichtung eingeführt wird, wobei die Temperatur des Gases größer als die Umgebungstemperatur ist, vorzugsweise zwischen 450 und 1000°C.

## Claims

1. Method of heat treatment of fine-grained material, particularly for the reduction of pollutants in cement manufacture, wherein the material is preheated in a preheater using the exit gases from a rotary kiln and is burnt in the rotary kiln which is fired from the material discharge side, characterised by the combination of the following method steps:
a) in order to produce a reducing atmosphere in the material inlet region of the rotary kiln, a proportion of the fuel used for the entire heat treatment is introduced into the material inlet region of the rotary kiln;
b) at least one strengthening reagent which aids the effect of the reducing atmosphere on the NOₓ reduction is also introduced into this material inlet region of the rotary kiln.

2. Method as claimed in claim 1, characterised in that components containing iron, components containing aluminium, compounds containing NH₂, NH₃ or NH₄⁺ or mixtures of these substances are used.

3. Method as claimed in claim 1, characterised in that 5 to 20%, preferably 8 to 15%, of the fuel used for the entire heat treatment is introduced into the material inlet region of the rotary kiln.

4. Method as claimed in claim 3, in which the material which is preheated in the preheater is initially deacidified in a precalcination zone supplied with additional fuel before it enters the rotary kiln, characterised in that 40 to 60% of the entire fuel is introduced in the region of the discharge side of the rotary kiln, 5 to 20% into the material inlet region of the rotary kiln and 20 to 55% in the region of the precalcinatlon zone.

5. Method as claimed in claim 3, in which the material preheated in the preheater is introduced directly into the rotary kiln, characterised in that 80 - 95% of the entire fuel is introduced in the region of the material discharge side of the rotary kiln and 5 to 20% in the material inlet region of the rotary kiln.

6. Method as claimed in claim 1, characterised in that a CO concentration of 0.1 to 5%, preferably 0.2 to 2%, is produced in the material inlet region of the rotary kiln.

7. Method as claimed in claim 1, characterised in that the strengthening regents are introduced into the rotary kiln mixed with the fuel.

8. Method as claimed in claim 1, characterised in that the strengthening reagents are introduced independently of the fuel, but into the same zones in the material inlet region of the rotary kiln as the fuel.

9. Method as claimed in claim 1, characterised in that the fuel and the strengthening reagents are introduced into the rotary kiln at a rate of 10 to 150 m/s, preferably 30 to 70 m/s.

10. Method as claimed in claim 1, characterised in that the exit gas leaving the rotary kiln passes through at least one further desulphurisation stage and/or denitrification stage (fuel grading, air grading, method of selective catalytic reduction, method of selective non-catalytic reduction).

11. Method as claimed in claim 10, characterised in that at least a proportion of the fuel and/or of the strengthening reagents originates from one of the desulphurisation stages and/or denitrification stages which follow in the gas direction.

12. Method as claimed in claim 1, characterised in that for the combustion of the CO formed in the material inlet region of the rotary kiln a hot gas containing oxygen - e.g. hot air from the cooler - is introduced into the gas duct or precalcination arrangement connected downstream of the rotary kiln in the gas direction, the temperature of the gas being higher than the ambient temperature, preferably between 450 and 1000°C.

## Revendications

1. Procédé de traitement thermique de matière à granulométrie fine, en particulier pour la réduction de substances nocives dans la fabrication du ciment, la matière étant réchauffée dans une réchauffeur par les gaz évacués d'un four tubulaire rotatif et étant cuite dans le four tubulaire rotatif dont le foyer se trouve du côté de la sortie de la matière,
caractérisé par la combinaison des étapes suivantes :
a) une partie du combustible utilisé pour la totalité du traitement thermique est introduite dans la zone d'introduction de la matière du four tubulaire rotatif afin de créer une atmosphère réductrice dans la zone d'introduction de la matière du four tubulaire rotatif;
b) par ailleurs, au moins un réactif de concentration qui favorise l'action de l'atmosphère réductrice sur la réduction des NOₓ est introduit dans cette zone d'introduction de la matière du four tubulaire rotatif.

2. Procédé selon la revendication 1, caractérisé en ce que les réactifs de concentration utilisés sont des composés contenant du fer, des composés contenant de l'aluminium, des combinaisons contenant du NH₂, du NH₃ ou du NH₄⁺ ou des mélanges de ces substances.

3. Procédé selon la revendication 1, caractérisé en ce que 5 à 20 %, de préférence 8 à 15 % du combustible utilisé pour la totalité du traitement thermique sont introduits dans la zone d'introduction de la matière du four tubulaire rotatif.

4. Procédé selon la revendication 3, suivant lequel la matière ayant passé dans le réchauffeur est encore tout d'abord désacidifiée dans une zone de précalcination alimentée en un complément de combustible avant son entrée dans le four tubulaire rotatif, caractérisé en ce que 40 à 60 % de la totalité du combustible sont introduits dans la zone située du côté de la sortie de la matière du four tubulaire rotatif, 5 à 20 % le sont dans la zone d'introduction de la matière du four tubulaire rotatif et 20 à 55 % le sont dans la zone de précalcination.

5. Procédé selon la revendication 3, suivant lequel la matière ayant passé dans le réchauffeur est introduite directement dans le four tubulaire rotatif, caractérisé en ce que 80-95 % de la totalité du combustible sont introduits dans la zone située du côté de la sortie de la matière du four tubulaire rotatif et 5 à 20 % le sont dans la zone d'introduction de la matière du four tubulaire rotatif.

6. Procédé selon la revendication 1, caractérisé en ce qu'une concentration de CO de 0,1 à 5 %, de préférence de 0,2 à 2 % est créée dans la zone d'introduction de la matière du four tubulaire rotatif.

7. Procédé selon la revendication 1, caractérisé en ce que les réactifs de concentration sont introduits en mélange avec le combustible dans le four tubulaire rotatif.

8. Procédé selon la revendication 1, caractérisé en ce que les réactifs de concentration sont introduits indépendamment du combustible, mais dans les mêmes régions de la zone d'introduction de la matière du four tubulaire rotatif que le combustible.

9. Procédé selon la revendication 1, caractérisé en ce que le combustible et les réactifs de concentration sont introduits dans le four tubulaire rotatif à une vitesse de 10 à 150 m/s, de préférence de 30 à 70 m/s.

10. Procédé selon la revendication 1, caractérisé en ce que les gaz d'évacuation quittant le four tubulaire rotatif passent par au moins un autre étage de désulfuration et/ou de dénitruration (étagement de l'admission du combustible, étagement de l'admission de l'air, procédé de réduction catalytique sélective, procédé de réduction sélective non catalytique).

11. Procédé selon la revendication 10, caractérisé en ce qu'au moins une partie du combustible et/ou des réactifs de concentrations est issue d'au moins l'un des étages de désulfuration et/ou des étages de dénitruration qui font suite dans le sens de la circulation des gaz.

12. Procédé selon la revendication 1, caractérisé en ce qu'un gaz chaud contenant de l'oxygène - par exemple de l'air chaud provenant du réfrigérant - est introduit dans le conduit des gaz ou le dispositif de précalcination monté en aval du four tubulaire rotatif, dans le sens de la circulation des gaz, afin de brûler le CO dégagé dans la zone d'introduction de la matière du four tubulaire rotatif, la température du gaz étant supérieure à la température ambiante et étant comprise de préférence entre 450 et 1000°C.
